**Europäisches Patentamt**

**European Patent Office**

**Office européen des brevets**

(19)

(11) Veröffentlichungsnummer: **0 517 098 A2**

## (12) EUROPÄISCHE PATENTANMELDUNG

(21) Anmeldenummer: **92108994.2**

(22) Anmeldetag: **28.05.92**

(51) Int. Cl.$^5$: **B23B 51/10**

(30) Priorität: **01.06.91 DE 4118021**

(43) Veröffentlichungstag der Anmeldung:
**09.12.92 Patentblatt 92/50**

(84) Benannte Vertragsstaaten:
**CH DE ES FR GB IT LI**

(71) Anmelder: **CHIRON-WERKE GMBH & CO. KG**
**Talstrasse 23**
**W-7200 Tuttlingen(DE)**

(72) Erfinder: **Hehl, Holger**
**Wolfsbühl 8**
**W-7200 Tuttlingen(DE)**
Erfinder: **Winkler, Hans-Henning**
**Regerweg 3**
**W-7200 Tuttlingen(DE)**

(74) Vertreter: **Witte, Alexander, Dr.-Ing. et al**
**Augustenstrasse 7**
**W-7000 Stuttgart 1(DE)**

(54) **Werkzeugmaschine.**

(57) Eine Werkzeugmaschine ist mit einem Rückwärtssenker (14) bestückt. Der Rückwärtssenker (14) umfaßt eine Betätigungsstange (20), die axial starr mit einem Kegel (13) verbunden ist, der seinerseits in eine Aufnahme (12) einer Spindel (11) der Werkzeugmaschine (10) eingespannt ist. Auf der Betätigungsstange (20) ist gegen die Kraft einer Feder (21) ein Anschlagteil (22) verschiebbar. Ferner ist eine zwischen Betätigungsstange (20) und Anschlagteil (22) wirksame Zwangssteuerung (27) vorgesehen. Mittels der Zwangssteuerung (27) kann durch axiales Verschieben der Betätigungsstange (20) relativ zum Anschlagteil (22) ein langgestrecktes Messer (30) an einem unteren Ende der Betätigungsstange (20) zwischen einer ersten stabilen Position (30a), in der das Messer (30) axial ausgerichtet ist, und einer zweiten stabilen Position (30b), in der das Messer (30) radial ausgerichtet ist, hin- und herbewegt werden. Ein Sensor (50) dient zum Erfassen der relativen Lage der Betätigungsstange (20) zum Anschlagteil (22). Der Sensor (50) ist mit einem Steuergerät (53) verbunden, in dem die erfaßte Lage (z) mit einem Sollwert ($z_1$, $z_2$) verglichen wird.

EP 0 517 098 A2

Die Erfindung betrifft eine Werkzeugmaschine mit einem Rückwärtssenker, der eine axial starr mit einem in einer Aufnahme einer Spindel der Werkzeugmaschine eingespannten Kegel des Rückwärtssenkers verbundene Betätigungsstange, ein auf der Betätigungsstange gegen die Kraft einer Feder verschiebbares Anschlagteil sowie eine zwischen Betätigungsstange und Anschlagteil wirksame Zwangssteuerung umfaßt, mittels derer durch axiales Verschieben der Betätigungsstange relativ zum Anschlagteil ein langgestrecktes Messer an einem unteren Ende der Betätigungsstange zwischen einer ersten stabilen Position, in der das Messer axial ausgerichtet ist und einer zweiten stabilen Position, in der das Messer radial ausgerichtet ist, hin- und herbewegbar ist.

Ein Rückwärtssenker für eine Werkzeugmaschine der vorstehend genannten Art ist aus der DE-OS 34 29 971 bekannt.

Der bekannte Rückwärtssenker dient dazu, um bei einem auf einem Werkstücktisch eingespannten Werkstück auf der vom Werkzeug abgewandten Seite eine Einsenkung in einer Durchgangsbohrung anzubringen, sei es, weil diese Seite des Werkstücks z.B. als Hohlraum ausgebildet und für ein Werkzeug ansonsten nicht zugänglich ist, oder sei es, daß ein Umspannen des Werkstücks vermieden werden soll.

Der bekannte Rückwärtssenker arbeitet nach Art eines Kugelschreibers, bei dem durch zweimaliges axiales Betätigen einer Betätigungsstange die Kugelschreibermine einmal herausgefahren und einmal eingefahren werden kann. Bei dem bekannten Rückwärtssenker ist ebenfalls die Betätigungsstange relativ zu einem Anschlagteil verschiebbar, und zwar gegen die Kraft einer Feder. Die Zwangssteuerung zwischen den beiden Teilen, die, wie erwähnt, nach Art einer Kugelschreibermechanik arbeitet, gestattet es, die Betätigungsstange in zwei axialen Endlagen relativ zum Anschlagteil zu verrasten. In einer der beiden axialen Endlagen fährt die Betätigungsstange am unteren Ende des Rückwärtssenkers ein Messer aus, das langgestreckt ausgebildet ist und zunächst axial angeordnet war, so daß es nicht seitlich über den unteren Abschnitt des Rückwärtssenkers vorsteht. Wird das Messer jedoch ausgefahren, klappt es von der axialen Ausrichtung in eine radiale Ausrichtung und steht nunmehr seitlich weit über den Umfang des unteren Abschnittes des Rückwärtssenkers vor.

Zum Ausführen eines Bearbeitungsschritts wird zunächst der Rückwärtssenker bei eingeklapptem Messer durch eine zuvor eingebrachte Durchgangsbohrung des Werkstücks hindurchgeführt. Die Betätigungsstange ist dabei starr mit dem Kegel eines Werkzeughalters verbunden, der wiederum in einer Aufnahme einer Spindel der Werkzeugmaschine eingespannt ist.

Die Spindel wird nun relativ zum Werkstück bewegt, indem üblicherweise die Spindel auf das Werkstück zu bewegt wird und das Werkstück raumfest auf einem Werkstücktisch angeordnet ist.

Das Anschlagteil ist nun mit einem verdickten Abschnitt versehen, der sich im mittleren Bereich des Anschlagteils befindet. Damit kann der untere, verjüngte Teil des Anschlagteils zusammen mit dem unteren Teil der Betätigungsstange und dem (noch) eingeklappten Messer durch die Durchgangsbohrung hindurchgesteckt werden, bis dann der verdickte Abschnitt des Anschlagteils auf der der Spindel zugewandten Oberfläche des Werkstücks zur Anlage kommt. Wird nun die Spindel weiter auf das Werkstück zu bewegt, so bewegt sich die Betätigungsstange zusammen mit der Spindel gegen die Kraft der Feder axial relativ zum Anschlagteil, das infolge der erwähnten Anlage am Werkstück jetzt raumfest stehen bleibt. Damit wird die Zwangssteuerung im Rückwärtssenker betätigt, und das nunmehr unterhalb des Werkstücks angeordnete Messer wird von der axialen Ausrichtung in die radiale Ausrichtung umgeklappt. Nun kann der Rückwärtssenker durch entsprechendes Verfahren der Spindel in entgegengesetzter Richtung wieder eingezogen werden, damit das Messer an der Rückseite des Werkstücks die gewünschte Einsenkung anbringt. In dieser Bearbeitungsposition ist der verdickte Abschnitt des Anschlagteils wieder von der Oberfläche des Werkstücks abgehoben.

Wenn nun die Bearbeitung beendet ist, fährt die Spindel wieder auf das Werkstück zu und bringt den verdickten Abschnitt des Anschlagteils wieder in Anlage an die Oberfläche des Werkstücks. Bei erneutem weiteren Einfahren der Betätigungsstange in das Anschlagteil hinein, und zwar wiederum gegen die Kraft der Feder, wird nun die Zwangssteuerung in entgegengesetztem Sinne wiederum betätigt und klappt das Messer aus der radialen Ausrichtung wieder in die axiale Ausrichtung zurück, so daß schlußendlich der untere Abschnitt des Rückwärtssenkers wieder aus der Durchgangsbohrung des Werkstücks herausgezogen werden kann.

Es hat sich nun gezeigt, daß in der Praxis gelegentlich Störungen auftreten, wenn die eine oder die andere stabile Position der Betätigungsstange relativ zum Anschlagteil infolge einer Störung nicht eingenommen wird und das Messer daher vor Beginn des Bearbeitungsvorganges nicht ausgeklappt oder nach Beendigung des Bearbeitungsvorganges nicht wieder eingeklappt wird. Vor allem letzteres kann dann vorkommen, wenn die beim Bearbeiten anfallenden Späne in die Klappmechanik des Messers geraten und das Messer verklemmen, so daß dieses nicht sauber wieder in die axiale Ausrichtung zurückgeklappt werden kann.

Während nun der erstgenannte Störfall (kein Ausklappen) keine wesentlichen Folgen hat, weil in diesem Falle lediglich die Bearbeitung des Werkstücks unterbleibt, hat die zweitgenannte Störung unter Umständen erhebliche Folgen, weil nämlich die Spindel versucht, den Rückwärtssenker mit seinem unteren Abschnitt wieder aus der Durchgangsbohrung des Werkstücks herauszuziehen, obwohl das Messer noch radial ausgeklappt ist. Dies kann zu erheblichen Beschädigungen am Werkstück, am Rückwärtssenker, aber auch an den Betätigungseinrichtungen und den Führungen der Spindel führen.

Der Erfindung liegt daher die Aufgabe zugrunde, eine Werkzeugmaschine der eingangs genannten Art dahingehend weiterzubilden, daß derartige Störfälle vermieden oder zumindest erkannt werden, so daß im letztgenannten Fall eine Abhilfe möglich ist, ehe Beschädigungen eintreten.

Diese Aufgabe wird erfindungsgemäß dadurch gelöst, daß ein Sensor zum Erfassen der relativen Lage der Betätigungsstange zum Anschlagteil vorgesehen und der Sensor mit einem Steuergerät verbunden ist, in der die erfaßte Lage mit einem Sollwert verglichen wird.

Die der Erfindung zugrundeliegende Aufgabe wird auf diese Weise vollkommen gelöst.

Die genannten Maßnahmen haben nämlich den Vorteil, daß die korrekte Funktion der Zwangssteuerung bei jedem Bearbeitungsvorgang überprüft werden kann, mit der Folge, daß im Falle einer Störung die Maschine angehalten und die Störungen durch einen Werker von Hand behoben werden kann. Insbesondere ist es nicht mehr möglich, daß ein Rückwärtssenker bei noch ausgefahrenem Messer zurückgezogen wird und hierdurch möglicherweise erhebliche Schäden an der Werkzeugmaschine auftreten.

Der Rückschluß von der relativen Lage der Betätigungsstange zum Anschlagteil ist deswegen zum Erkennen derartiger Störungen ausreichend, weil die Zwangssteuerung, wie bereits der Begriff sagt, nur dann ihre beiden Endlagen erreicht, wenn das Messer ebenfalls seine beiden entsprechenden Endlagen eingenommen hat. Wenn also in einem typischen Störfall durch Materialspäne ein Einklappen des Messers aus der radialen Ausrichtung in die axiale Ausrichtung unterbleibt, weil das Messer in seiner Bewegungsbahn eingeklemmt ist, so führt dies zwangsläufig dazu, daß auch die Zwangssteuerung nicht ihre Endposition einnehmen kann, weil sie nicht in der Lage ist, das Messer in die gewünschte axiale Endlage mitzunehmen.

Die Erfindung bringt daher eine extrem zuverlässige Überwachung des Rückwärtssenkers mit sich.

Es versteht sich dabei, daß unter "Erfassen der relativen Lage" sowohl kontinuierliche wie auch diskrete Überwachungen zu verstehen sind. So ist es beispielsweise möglich, durch mehrere Sensoren unterschiedliche Positionen des Anschlagteils relativ zur Betätigungsstange zu erfassen, was beispielsweise dann zweckmäßig ist, wenn die relative Lage in den beiden Endpositionen unterschiedlich ist.

Bei einer bevorzugten Ausgestaltung der Erfindung ist der Sensor als Näherungssensor ausgebildet und starr mit der Spindel verbunden, derart, daß ein vorspringender Abschnitt des Anschlagteils bei dessen axialer Relativbewegung zur Betätigungsstange an dem Sensor vorbeiläuft.

Diese Maßnahme hat den Vorteil, daß die Positionserfassung lediglich die Funktion einer Ereigniserfassung hat, wodurch es möglich ist, nur mit Referenzmarken zu arbeiten, deren Vorbeilaufen an einem Sensor ein entsprechendes Ereignissignal auslöst. Andernfalls wäre es erforderlich, eine Längsmarkierung vorzusehen, um den gesamten Verschiebeweg kontinuierlich erfassen zu können. Dies ist jedoch in den meisten Fällen nicht nötig.

Es sei an dieser Stelle auch angemerkt, daß der Sensor selbstverständlich auf jedem der zueinander bewegten Elemente angeordnet werden kann, also beispielsweise sowohl an dem Anschlagteil wie auch an der Betätigungsstange, wobei dann das jeweils andere Teil die Markierung trägt. Dabei ist unter "an" jedwede starre Verbindung der Elemente zu verstehen.

Bei einer weiteren bevorzugten Ausgestaltung der Erfindung ist der vorspringende Abschnitt als umlaufender Rand des Anschlagteils ausgebildet.

Diese Maßnahme hat den Vorteil, daß auch bei rotierendem Werkzeug eine zuverlässige Erkennung möglich ist. Wenn nämlich z.B. der Rückwärtssenker um eine vertikale Achse rotiert, der Sensor in einer Horizontalebene angeordnet ist und das rotierende Anschlagteil zusätzlich in einer vertikalen Richtung bewegt wird, so wird in jedem Falle das Vorbeilaufen des umlaufenden Randes am Sensor erkannt, unabhängig davon, ob der Rand nun stillsteht oder umläuft, weil in jedem Falle dem Sensor ein Bezugselement des Anschlagteils gegenübersteht.

Es darf an dieser Stelle angemerkt werden, daß unter "Sensor" in diesem Falle jedwede Art von Sensoren zu verstehen ist, die für derartige Aufgaben einsetzbar ist. Hier sind insbesondere magnetische, kapazitive und optische Sensoren zu nennen, wie diese an sich bekannt sind.

Bei einem weiteren Ausführungsbeispiel der Erfindung umfaßt das Steuergerät eine Zeitsteuerung, die das Auftreten von Sensorsignalen mit einem Bewegungsablauf der Spindel während des Einfahrens des Rückwärtssenkers in eine Durchgangsbohrung eines Werkstücks vergleicht.

Diese Maßnahme hat den Vorteil, daß Plausibilitätskontrollen möglich sind.

Wenn nämlich z.B. der Rückwärtssenker mit axial eingeklapptem Messer durch die Durchgangsbohrung hindurchgefahren wird, so kann man anhand der Einfahrgeschwindigkeit der Spindel und der Abmessungen des unteren Abschnitts des Rückwärtssenkers ein Zeitfenster definieren, innerhalb dessen ein Sensorsignal auftreten müßte, das das Ausklappen des Messers aus der axialen Ausrichtung in die radiale Ausrichtung anzeigt.

Wenn das Signal innerhalb des genannten Zeitfensters jedoch ausbleibt, so kann bereits auf eine Störung geschlossen werden, die in diesem Falle darin besteht, daß das Messer nicht ausgefahren wurde. In diesem Falle kann die Steuerung vorsehen, daß der Rückwärtssenker sofort wieder herausgezogen und ein entsprechender Alarm gegeben wird, damit ein Werker den offenbar fehlerhaften Rückwärtssenker gegen einen anderen Rückwärtssenker austauscht.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Die einzige Figur zeigt eine Seitenansicht eines in einer erfindungsgemäßen Werkzeugmaschine eingespannten Rückwärtssenkers, der an einem Werkstück arbeitet.

In der Figur bezeichnet 10 insgesamt eine nur ausschnittsweise dargestellte Werkzeugmaschine, insbesondere ein vertikalachsiges Bearbeitungszentrum, wie es zum numerisch gesteuerten Ausführen von Bohr- und Fräsarbeiten an Werkstücken eingesetzt wird.

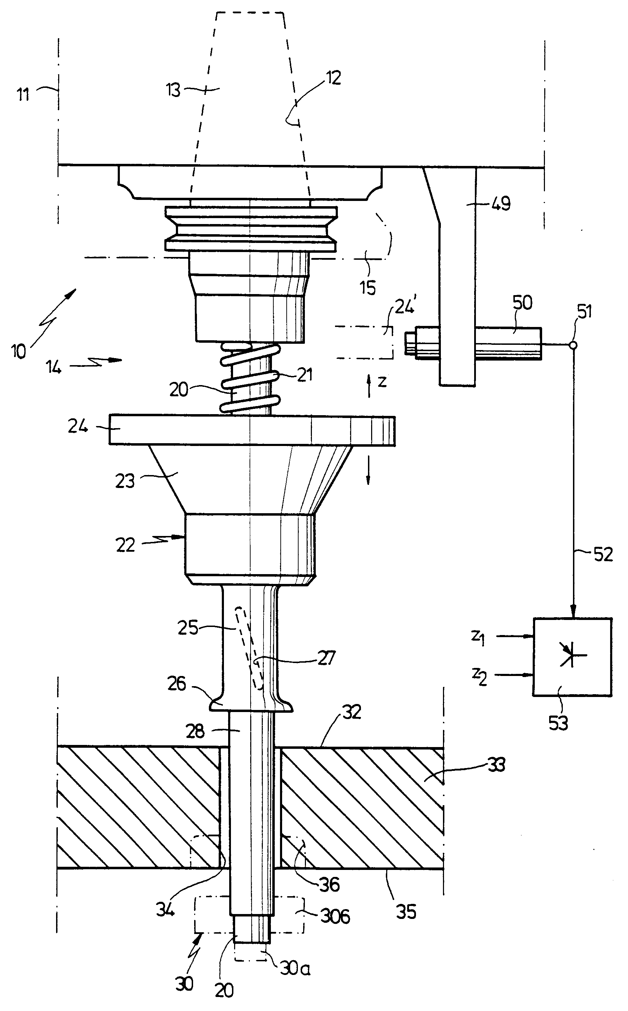

Mit 11 ist äußerst schematisch eine Spindel der Werkzeugmaschine 10 angedeutet, die u.a. in vertikaler Richtung (in der zeichnerischen Darstellung der Fig. 1) verfahren werden kann.

Eine Aufnahme 12 in der Spindel 11 dient zum Halten eines Kegels 13 eines Rückwärtssenkers 14. Der Rückwärtssenker 14 ist vorzugsweise in einem nur schematisch angedeuteten Greifer 15 eines Werkzeugwechslers von ebenfalls an sich bekannter Bauart gehalten.

Der Rückwärtssenker 14 umfaßt eine zentrale Stange 20, die starr mit dem Kegel 13 verbunden ist. Die Stange 20 ist über eine Feder 21 gegen ein Anschlagteil 22 abgestützt, das hülsenartig ausgebildet und auf der Stange 20 gegen die Kraft der Feder 21 axial verschiebbar ist.

Das Anschlagteil 22 umfaßt an seinem oberen Ende einen trichterförmigen Abschnitt 23, der einen radial verdickten oberen Rand 24 umfaßt. Der obere Rand 24 besteht bevorzugt aus einem Metall.

An den trichterförmigen Abschnitt 23 schließt sich unten ein Rohrstück 25 an, das in seinem mittleren Bereich mit einem radial verdickten Anschlag 26 versehen ist. Unterhalb des Anschlages 26 geht das Rohrstück 25 in einen weiter verjüngten nach unten weisenden Abschnitt 28 über.

Mit 27 ist eine Zwangssteuerung angedeutet, die zwischen dem Anschlagteil 22 und der Stange 20 wirkt. Die Zwangssteuerung 27 kann z.B. eine wendelartig verlaufende Kulisse umfassen, an der ein Zapfen läuft, um eine relative Axialbewegung der Stange 20 zum Anschlagteil 22 in eine Drehung umzusetzen. Durch diesen kombinierten Bewegungsablauf wird am unteren Ende des Abschnitts 28 bzw. der Stange 20 ein Messer 30 umgeklappt.

Das Messer 30 ist in der Figur in einer ersten stabilen Position 30a dargestellt, indem es in axialer Richtung ausgerichtet ist und damit nicht über die äußere Kontur des Abschnittes 28 übersteht.

Mit 30b ist eine zweite stabile Position des Messers 30 angedeutet, in der dieses um 90° herumgeklappt wurde, so daß es nun zu beiden Seiten des Abschnittes 28 radial weit über diesen vorsteht.

Die Zwangssteuerung 27 arbeitet insgesamt nach Art einer Kugelschreibermechanik, indem die Stange 20 axial relativ zum Anschlagteil 22 bewegt wird, so daß bei erstmaligem Zusammenschieben der genannten Elemente 20, 22 über einen Druckpunkt hinaus das Messer 30 in die ausgeklappte Position 30b gebracht wird, während es nach nochmaligem Betätigen der Zwangssteuerung 27 wieder in die andere Position 30a in axialer Ausrichtung zurückgeklappt wird.

Die Zwangssteuerung 27 ist an sich bekannt und nicht Gegenstand der vorliegenden Erfindung.

Im praktischen Einsatz befindet sich die Spindel 11 mit dem Rückwärtssenker 14 oberhalb einer oberen Oberfläche (Vorderseite) 32 eines Werkstücks 33, das z.B. auf einem raumfesten Werkstücktisch aufgespannt ist.

Das Werkstück 33 wurde in einem zuvor ausgeführten Bearbeitungsschritt mit einer Durchgangsbohrung 34 versehen, deren Durchmesser größer ist als der Außendurchmesser des Abschnittes 28, jedoch kleiner als der Außendurchmesser des Anschlages 26.

Die Spindel 11 wird nun so verfahren, daß ihre Achse mit der Achse der Durchgangsbohrung 34 fluchtet, und sie wird dann in der Darstellung der Figur nach unten verfahren, bis der Abschnitt 28 des Anschlagteils 22 in die Durchgangsbohrung 34 taucht und durch diese hindurchgreift, bis schließlich der Anschlag 26 des Anschlagteils 22 auf der Vorderseite 32 des Werkstücks 33 zur Anlage kommt.

Während nun das Anschlagteil 22 raumfest auf der Vorderseite 32 aufliegt, wird die Spindel 11 weiter nach unten verfahren, mit der Folge, daß die Stange 20 relativ axial zum Anschlagteil 22 verfahren wird, und zwar gegen die Kraft der Feder 21.

Das untere Ende der Stange 20 und des Abschnittes 28 ragt dabei bereits über die untere Oberfläche (Rückseite) 35 des Werkstücks 33 vor, wie dies in der Figur dargestellt ist.

Wenn nun der Druckpunkt der Zwangssteuerung 27 erreicht ist, klappt das Messer 30 aus der zuvor eingenommenen Stellung 30a in die ausgefahrene Stellung 30b um.

Die Spindel 11 wird nun wieder nach oben verfahren, mit der Folge, daß das Anschlagteil 22 auch wieder von der Vorderseite 32 des Werkstücks 33 abhebt.

Bei entsprechendem Verfahrweg nach oben gelangt nun das Messer 30 in Eingriff mit der Rückseite 35 des Werkstücks 33 und bringt dort eine vorgesehene Einsenkung 36 an.

Über einen Arm 49 ist nun ein Sensor 50 starr mit der Spindel 11 verbunden. Der Sensor 50 ist in einer Horizontalebene wirksam und kann z.B. magnetisch, kapazitiv, optisch oder sonstwie arbeiten. Der Sensor 50 erkennt mit seiner in der Figur linken Stirnseite die Annäherung eines Objektes. Wenn der Sensor 50 also z.B. magnetisch arbeitet, so würde er das Herankommen des vorzugsweise ferromagnetischen metallischen oberen Randes 24 erkennen. Entsprechendes gilt für optische Reflektionssensoren, Wirbelstromsensoren, Hall-Effekt-Sensoren u. dgl.

Der Sensor 50 ist über einen Anschluß 51 und eine Leitung 52 mit einem Steuergerät 53 verbunden.

Bezeichnet man die vertikale Verfahrrichtung der Spindel 11 mit z, so sind dem Steuergerät 53 Sollwerte $z_1$ , $z_2$ ... zuführbar.

Wenn sich die Spindel 11 in der in der Figur dargestellten Position befindet, so ist der Rand 24 in vertikaler Richtung (z-Richtung) vom Sensor 50 beabstandet, weil die Feder 21 entspannt ist.

Wenn jedoch nun das Anschlagteil 22 auf der Vorderseite 32 des Werkstücks 33 aufsitzt, wird die Feder 21 in der beschriebenen Weise zusammengedrückt, bis beim Erreichen des Druckpunktes bzw. Endpunktes der Zwangssteuerung 27 der Rand 24 die in der Figur mit 24' angedeutete Endstellung einnimmt, in der er dem Sensor 50 gerade gegenübersteht.

Ein entsprechendes Signal wird über die Elemente 51, 52 an das Steuergerät 53 gemeldet, das nun durch Vergleich mit den Sollwerten $z_1$ und $z_2$ feststellen kann, ob die gewünschte Endlage erreicht wurde.

Für den Fall, daß für die beiden Wechselvorgänge des Ausklappens bzw. Einklappens des Messers 30 unterschiedliche Druckpunkte durch die Zwangssteuerung 27 vorgesehen sind, können natürlich auch mehrere Sensoren 50 und mehrere Sollwerte $z_1$ , $z_2$ ... vorgesehen werden.

Das Steuergerät 53 kann überdies eine Zeitsteuerung enthalten.

Diese Zeitsteuerung dient dazu, um bei bekannter Verfahrgeschwindigkeit der Spindel 11 zu überprüfen, ob beim Einfahren des Rückwärtssenkers 14 in die Durchgangsbohrung 34 zu dem erwartbaren Zeitpunkt das Signal vom Sensor 50 eintrifft, das angibt, daß durch Betätigen der Zwangssteuerung 27 das Messer 30 in die ausgeklappte Stellung 30b ausgeklappt wurde. Wenn innerhalb eines auf diese Weise definierten Zeitfensters keine derartige Meldung eingeht, so bedeutet dies, daß das Messer 30 aus irgendeinem Grunde nicht ausgefahren wurde. Die Spindel 11 kann dann durch das Steuergerät 53 veranlaßt werden, wieder herauszufahren und zugleich einen Alarm zu geben, so daß der aufgetretene Fehler ohne Zeitverlust beseitigt werden kann.

## Patentansprüche

1. Werkzeugmaschine mit einem Rückwärtssenker (14), der eine axial starr mit einem in einer Aufnahme (12) einer Spindel (11) der Werkzeugmaschine (10) eingespannten Kegel (13) des Rückwärtssenkers (14) verbundene Betätigungsstange (20), ein auf der Betätigungsstange (20) gegen die Kraft einer Feder (21) verschiebbares Anschlagteil (22) sowie eine zwischen Betätigungsstange (20) und Anschlagteil (22) wirksame Zwangssteuerung (27) umfaßt, mittels derer durch axiales Verschieben der Betätigungsstange (20) relativ zum Anschlagteil (22) ein langgestrecktes Messer (30) an einem unteren Ende der Betätigungsstange (20) zwischen einer ersten stabilen Position (30a), in der das Messer (30) axial ausgerichtet ist und einer zweiten stabilen Position (30b), in der das Messer (30) radial ausgerichtet ist, hin- und herbewegbar ist, dadurch gekennzeichnet, daß ein Sensor (50) zum Erfassen der relativen Lage der Betätigungsstange (20) zum Anschlagteil (22) vorgesehen und der Sensor (50) mit einem Steuergerät (53) verbunden ist, in dem die erfaßte Lage (z) mit einem Sollwert ($z_1$ , $z_2$) verglichen wird.

2. Werkzeugmaschine nach Anspruch 1, dadurch gekennzeichnet, daß der Sensor als Näherungssensor ausgebildet und starr mit der Spindel (11) verbunden ist, derart, daß ein vorspringender Abschnitt des Anschlagteils (22) bei dessen axialer Relativbewegung zur Betätigungsstange (20) an dem Sensor (50) vorbeiläuft.

3. Werkzeugmaschine nach Anspruch 2, dadurch gekennzeichnet, daß der vorspringende Abschnitt als umlaufender Rand (24) des Anschlagteils (22) ausgebildet ist.

4. Werkzeugmaschine nach Anspruch 2 oder 3, dadurch gekennzeichnet, daß das Steuergerät (53) eine Zeitsteuerung umfaßt, die das Auftreten von Sensorsignalen mit einem Bewegungsablauf der Spindel (11) während des Einfahrens des Rückwärtssenkers (14) in eine Durchgangsbohrung (34) eines Werkstücks (33) vergleicht.